(19) Europäisches Patentamt / European Patent Office / Office européen des brevets

(11) **EP 4 666 841 A1**

(12) **EUROPÄISCHE PATENTANMELDUNG**

(43) Veröffentlichungstag:
**24.12.2025 Patentblatt 2025/52**

(21) Anmeldenummer: **24182459.8**

(22) Anmeldetag: **17.06.2024**

(51) Internationale Patentklassifikation (IPC):
**A01F 15/18** (2006.01)     **F16H 55/30** (2006.01)
**F16C 35/063** (2006.01)     F16C 17/02 (2006.01)
F16C 19/04 (2006.01)     F16C 19/24 (2006.01)

(52) Gemeinsame Patentklassifikation (CPC):
**A01F 15/18; F16C 35/063; F16H 55/30;**
A01F 2015/186; F16C 17/02; F16C 19/04;
F16C 19/24; F16C 2226/50; F16C 2226/60;
F16C 2310/00; F16C 2361/61; F16C 2361/63

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Deere & Company**
**Moline, IL 61265 (US)**

(72) Erfinder: **CHASSIBOUD, JEAN-LOUP**
**68163 Mannheim (DE)**

(74) Vertreter: **Stein, Stefan**
**John Deere GmbH & Co. KG**
**Global Intellectual Property Services**
**John-Deere-Straße 70**
**68163 Mannheim (DE)**

(54) **VORRICHTUNG FÜR EINEN KETTENTRIEB, KETTENTRIEB UND BALLENPRESSE**

(57)     Es wird eine Vorrichtung (70) für einen Kettentriebs (40, 44, 48) vorgeschlagen. Die Vorrichtung (70) umfasst einen Kettentrieb (40, 44, 48), einen Lagerzapfen (72), und einem auf dem Lagerzapfen (72) angeordneten Rotationslager (74) und einem auf dem Rotationslager (74) geführten Kettenrad (58, 60, 62, 64, 66, 68). Am Lagerzapfen (72) sind ein erster Anschlag (82) und ein zweiter Anschlag (84) angeordnet. Das Rotationslager (74) ist auf dem Lagerzapfen (72) zwischen dem ersten Anschlag (82) und dem zweiten Anschlag (84) entlang einer axialen Richtung (202) des Lagerzapfens (72) frei bewegbar. Ferner werden ein Kettentrieb (40, 44, 48) und eine Rundballenpresse mit einem solchen Kettentrieb (40, 44, 48) vorgeschlagen.

FIG. 3

EP 4 666 841 A1

**Beschreibung**

Die Erfindung betrifft eine Vorrichtung für einen Kettentrieb gemäss dem Oberbegriff des unabhängigen Anspruchs 1 und einen Kettentrieb gemäss dem Oberbegriff des unabhängigen Anspruchs 12 und eine Ballenpresse gemäss dem Oberbegriff des unabhängigen Anspruchs 13.

Im Stand der Technik sind eine Vielzahl von Rundballenpressen bekannt, wobei zwischen Rundballenpressen mit fester und Rundballenpressen mit variabler Presskammer unterschieden wird. Rundballenpressen mit fester Presskammer zeichnen sich dadurch aus, dass über den Umfang einer definierten zylindrischen Presskammer eine Mehrzahl von Presswalzen angeordnet sind, die den Pressraum in Umfangsrichtung begrenzen. An den Stirnseiten wird der zylindrische Pressraum durch jeweilige Seitenwände begrenzt. Rundballenpressen mit variabler Presskammer zeichnen sich hingegen dadurch aus, dass der zylindrischer Pressraum durch einen oder mehrere Pressriemen in Umfangsrichtung begrenzt wird, wobei der Pressriemen über mehrere Walzen geführt wird. Durch Lageveränderung einer oder mehrerer Walzen während des Pressvorgangs gestaltet sich der Umfang des Pressraumes variabel. An den Stirnseiten wird der zylindrische Pressraum ebenfalls durch jeweilige Seitenwände begrenzt. Ferner ist es bekannt, sowohl die Presswalzen einer Rundballenpresse mit fester Presskammer, als auch die Walzen einer Rundballenpresse mit variabler Presskammer über einen Kettentrieb anzutreiben bzw. in Rotation zu bringen. Derartige Kettentriebe sind an einem Rahmen der Rundballenpresse an einer oder beiden Seitenwänden außerhalb des Pressraums angeordnet. Der Kettentrieb umfasst dabei mehrere Zahnräder bzw. Kettenräder, die mit den Presswalzen bzw. Walzen verbunden sind, wobei die Kettenräder über eine oder mehrere Antriebsketten in Antriebsverbindung stehen.

Eine derartige Rundballenpresse ist beispielsweise aus DE 196 32 762 A1 bekannt. Darin wird, eine Antriebsvorrichtung für die eine Presskammer umgrenzenden Presswalzen einer Rundballenpresse gezeigt, wobei mehrere Kettentriebe vorgesehen sind. Die einzelnen Kettentriebe dienen jeweils zum Antrieb einer Teilanzahl der insgesamt anzutreibenden Presswalzen, wobei Antriebskettenräder zum Antrieb der einzelner Kettentriebe gemeinsam antreibbar sind. Die zum Antreiben der Presswalzen bestimmten Kettenräder sind auf einem Kreisbogen in einem seitlichen Gehäuseteil der Rundballenpresse angeordnet und die Kettentriebe sind parallel zueinander angebracht.

Eine weitere Rundballenpresse aus dem Stand der Technik zeigt EP 2 952 089 A1, bei der mehrere Presswalzen um eine Presskammer herum angeordnet sind und durch einen Kettentrieb mit einer gemeinsamen Kette angetriebene Kettenräder tragen. Wenigstens eines der Kettenräder und die dazugehörige Presswalze weisen zusammenwirkende Führungsmittel, in Form einer Wellenaußenverzahnung an der Presswalze und einer damit zusammenwirkenden Nabeninnenverzahnung am Kettenrad, auf, die das Kettenrad und die Presswalze in Drehrichtung formschlüssig verbinden und eine Bewegung des Kettenrades in Axialrichtung der Presswalze zulassen. Außerdem sind Mittel zum Fixieren der axialen Position des Kettenrades in Form einer am Presswalzenstummel befestigten Wellenmutter und einer damit in Eingriff stehenden Außenverzahnung vorgesehen. Die hier offenbarte Ausgestaltung der Presswalzen und Kettenräder ist für antriebsübertragende Kettenräder geeignet, erweist sich jedoch als aufwändig in Kosten und Fertigung. Sie erfüllt jedoch das Erfordernis der axialen Verstellbarkeit der Kettenräder zur Feinjustierung innerhalb des Kettentriebs.

Bei den oben genannten Kettentrieben ist es üblich die Kette von einem Antriebskettenrad an die anzutreibenden Kettenräder der Presswalzen zu führen, wobei zum einen eine Kettenführung mit mehreren Windungen und schlaufenartigen Führungen der Kette erforderlich ist, insbesondere, um ein Verschwenken der Presswalzen zum Öffnen der Presskammer zu ermöglichen. Zum anderen muss ein derartiger Kettentrieb auf Spannung gehalten werden. Um dies zu ermöglichen sind in einem Kettentrieb der oben genannten Art, neben den anzutreibenden Kettenrädern, weitere Kettenräder angeordnet, die innerhalb des Kettentriebs zwecks der oben genannten Kettenführung als Umlenk- oder Führungskettenräder und/oder als Kettenräder zum Spannen des Kettentriebs dienen. Diese weiteren Kettenräder müssen ebenfalls, einer axialen Feinjustierung unterzogen werden, um präzise im Lauf der Kette zu liegen. Die Feinjustierung der an den Lagerzapfen gelagerten Kettenräder erfolgt üblicherweise mittels Abstandsscheiben oder Abstandshaltern, die beidseitig der Stirnseiten des Rotationslagers auf dem Lagerzapfen montiert werden, wie es beispielsweise von den Montagen der Kettentriebe an einer John Deere Rundballenpresse des Typs F441R bekannt ist. Diese Methode der axialen Feinjustierung gestaltet sich oftmals als sehr zeitaufwendig und kann mitunter das mehrmalige Montieren und Demontieren des Kettenrades am Lagerzapfen erfordern. Die Anwendung der oben beschriebenen Lösung zum Feinjustieren von angetriebenen Kettenrädern ist für ein auf einem Rotationslager geführten Kettenrades ungeeignet bzw. nicht praktikabel.

Der vorliegenden Erfindung liegt daher die Aufgabe zugrunde eine Vorrichtung für einen Kettentrieb, einen Kettentrieb und eine Ballenpresse vorzuschlagen, durch welche die vorgenannten Probleme überwunden werden. Insbesondere sollen eine Vorrichtung für einen Kettentrieb, einen Kettentrieb und eine Ballenpresse vorgeschlagen werden, die es ermöglichen auf konstruktiv einfach Art und Weise eine axiale Feinjustierung vorzunehmen.

Diese Aufgabe wird durch eine Vorrichtung für einen Kettentrieb mit den Merkmalen des Anspruchs 1 und einen Kettentrieb mit den Merkmalen des Anspruchs 12 und eine Ballenpresse mit den Merkmalen des Anspruchs 13 gelöst. Die abhängigen Ansprüche beziehen sich auf besonders vorteilhafte Ausführungsformen der Erfindung.

Erfindungsgemäß wird eine Vorrichtung für einen Kettentrieb vorgeschlagen, insbesondere eine Vorrichtung zum Justieren eines Kettenrades eines Kettentriebs einer Ballenpresse vorgeschlagen. Die Vorrichtung umfasst einen Lagerzapfen und einem auf dem Lagerzapfen angeordnetes Rotationslager und einem auf dem Rotationslager geführten Kettenrad. Der Lagerzapfen kann insbesondere ein freies Ende und ein festes Ende umfassen. Am Lagerzapfen, insbesondere am festen Ende des Lagerzapfens, ist ein erster Anschlag und, insbesondere am freien Ende, ein zweiter Anschlag angeordnet. Der Lagerzapfen kann insbesondere den ersten und zweiten Anschlag umfassen. Im Speziellen können der erste und/oder der zweite Anschlag als Bestandteil oder Teil des Lagerzapfens ausgebildet sein. Das Rotationslager ist zwischen dem ersten Anschlag und dem zweiten Anschlag angeordnet. Das Rotationslager ist auf dem Lagerzapfen zwischen dem ersten und zweiten Anschlag entlang einer axialen Richtung des Lagerzapfens oder in eine axiale Richtung des Lagerzapfens frei bewegbar, bevorzugt frei bewegbar gelagert. Mit anderen Worten, das Rotationslager ist auf dem Lagerzapfen zwischen dem ersten und zweiten Anschlag entlang einer axialen Richtung des Lagerzapfens oder in eine axiale Richtung des Lagerzapfens schwimmend gelagert.

Wesentlich für die Erfindung ist, dass auf eine axiale Feinjustierung des Rotationslagers bzw. des Kettenrades sowie eine Abstandsscheibe oder ein Abstandselement verzichtet werden kann. Es ist also insbesondere kein Abstandselement zwischen dem ersten und/oder zweiten Anschlag und dem Rotationslager vorgesehen. Vorteilhafterweise entfällt somit eine aufwändige Einstellung des Kettenrades bzw. des Rotationslagers am Lagerzapfen mit Abstandselementen. Aufgrund der schwimmenden Lagerung richtet sich das Rotationslager bzw. das Kettenrad selbst aus und es kann auf ein Abstandselement verzichtet werden.

In Ausgestaltung der Erfindung umfasst das Rotationslager eine erste Stirnfläche und/oder eine zweite Stirnfläche. Ein erster Abstandzwischen dem ersten und zweiten Anschlag, insbesondere entlang der axialen Richtung am Lagerzapfen, minus einen zweiten Abstand zwischen der ersten und zweiten Stirnfläche, der insbesondere der kleinste oder direkte Abstand zwischen der ersten und zweiten Stirnfläche sein kann, ist $\geq 6$ mm ist, bevorzugt $\geq 8$ mm, besonders bevorzugt $\geq 10$ mm. Der zweite Abstand kann dabei der Breite des Rotationslagers entsprechen.

Somit gilt

$$A_1 - A_2 \geq 6\,mm$$

Mit

$A_1$ = Erster Abstand
$A_2$ = Zweiter Abstand

Mit anderen Worten, die Summe eines dritten Abstands, insbesondere in axiale oder entlang der axialen Richtung des Lagerzapfens, zwischen der ersten Stirnfläche und dem ersten Anschlag und eines vierten Abstands, insbesondere in axiale Richtung des Lagerzapfens, zwischen der zweiten Stirnfläche und dem zweiten Anschlag ist $\geq 6$ mm, bevorzugt $\geq 8$ mm, besonders bevorzugt $\geq 10$ mm.

Somit gilt

$$A_3 + A_4 \geq 6\,mm$$

Mit

$A_3$ = Dritter Abstand
$A_4$ = Vierter Abstand

Die erste Stirnfläche kann dem ersten Anschlag und/oder insbesondere dem festen Ende des Lagerzapfens zugewandt sein und die zweite Stirnfläche kann dem zweiten Anschlag und/oder insbesondere dem freien Ende des Lagerzapfens zugewandt sein. Vorteilhafterweise kann dadurch erreicht werden, dass das Rotationslager auf dem Lagerzapfen zwischen dem ersten und zweiten Anschlag entlang einer axialen Richtung des Lagerzapfens oder in eine axiale Richtung des Lagerzapfens auf mindestens 6 mm schwimmend gelagert und/oder frei bewegbar ist, bevorzugt frei bewegbar gelagert ist.

In Ausgestaltung der Erfindung ist der erste Anschlag am festen Ende des Lagerzapfens und/oder der zweite Anschlag am freien Ende des Lagerzapfens ausgebildet und/oder angeordnet. Im Speziellen kann der erste Anschlag als Teil des Lagerzapfens ausgebildet sein und/oder der zweite Anschlag als Teil des Lagerzapfens ausgebildet sein. Alternativ oder zusätzlich können der erste und/oder zweite Anschlag als Bauteile auf dem Lagerzapfen angeordnet sein. Der erste Anschlag durch das den Lagerzapfen tragende Bauteil selbst ausgebildet sein.

In Ausgestaltung der Erfindung umfasst der erste Anschlag einen Wellenabsatz oder ist als Wellenabsatz ausgebildet. Der Wellenabsatz kann am Lagerzapfen zwischen dem Rotationslager und dem festen Ende ausgebildet und/oder angeordnet sein und/oder in den Lagerzapfen eingearbeitet sein kann. Ebenso kann der erste Anschlag einen Sprengring umfassen. Der Sprengring kann in einer am Lagerzapfen zwischen dem Rotationslager und dem festen Ende ausgebildeten Ringnut eingefasst sein.

In Ausgestaltung der Erfindung umfasst der erste Anschlag eine erste Gewindemutter. Der erste Anschlag kann insbesondere als erste Gewindemutter ausgebildet sein.

Am Lagerzapfen zwischen dem Rotationslager und dem festen Ende des Lagerzapfens ist ein erstes Außengewinde ausgebildet und/oder angeordnet. Im Speziellen kann das ersten Außengewinde am festen Ende des Lagerzapfens ausgebildet und/oder angeordnet sein. Das erste Aussengewinde kann als Teil des Lagerzapfens, insbesondere als integraler Bestandteil des Lagerzapfens, ausgebildet sein. Die erste Gewindemutter ist auf dem ersten Außengewinde angeordnet, bevorzugt mit diesem verbunden, besonders bevorzugt drehbar und lösbar mit diesem verbunden.

Dadurch kann vorteilhafterweise ein verstellbarer erster Anschlag bereitgestellt werden, wodurch der axiale Verstellweg des Rotationslagers bzw. des Kettenrades durch Verstellen der ersten Gewindemutter zusätzlich variierbar ist, insbesondere der erste und/oder dritte Abstand entlang der axialen Richtung zwischen dem ersten und zweiten Anschlag verstellbar oder variierbar ist.

In Ausgestaltung der Erfindung umfasst der zweite Anschlag eine Spannplatte. Der zweite Anschlag kann insbesondere als Spannplatte ausgebildet sein. Die Spannplatte ist am freien Ende des Lagerzapfens angeordnet, insbesondere befestigt. Ausserdem kann der Lagerzapfen einen Innengewindebereich und/oder ein Innengewinde umfassen. Der Innengewindebereich und/oder das Innengewinde können als Teil des Lagerzapfens ausgebildet sein und/oder in diesem angeordnet sein. Die Spannplatte kann mit oder durch eine Spannschraube mit dem Innengewindebereich und/oder dem Innengewinde, und somit mit dem Lagerzapfen, verbunden sein, insbesondere an diesem befestigt sein. Das Rotationslager ist auf dem Lagerzapfen zwischen der Spannplatte und dem ersten Anschlag in axiale Richtung frei beweglich. Im Speziellen kann der erste Abstand zwischen dem ersten Anschlag und der Spannplatte minus den zweiten Abstand $\geq$ 6 mm sein, bevorzugt $\geq$ 8 mm, besonders bevorzugt $\geq$ 10 mm sein. Mit anderen Worten, die Summe des dritten Abstands und eines vierten Abstands, insbesondere in axiale Richtung des Lagerzapfens, zwischen der zweiten Stirnfläche und der Halteplatte ist $\geq$ 6 mm.

In Ausgestaltung der Erfindung umfasst der zweite Anschlag eine zweite Gewindemutter. Der zweite Anschlag kann insbesondere als eine zweite Gewindemutter ausgebildet sein.

Am freien Ende des Lagerzapfens ist ein zweites Außengewinde ausgebildet und/oder angeordnet. Das zweite Aussengewinde kann als Teil des Lagerzapfens, insbesondere als integraler Bestandteil des Lagerzapfens, ausgebildet sein. Die zweite Gewindemutter ist auf dem zweiten Außengewinde angeordnet, bevorzugt mit diesem verbunden, besonders bevorzugt drehbar und lösbar mit diesem verbunden. Dadurch kann das Rotationslager auf dem Lagerzapfen zwischen der zweiten Gewindemutter und dem ersten Anschlag in axiale Richtung frei beweglich sein, also insbesondere schwimmend gelagert ist. Dadurch kann vorteilhafterweise ein verstellbarer zweiter Anschlag bereitgestellt werden, wodurch der axiale Verstellweg des Rotationslagers bzw. des Kettenrades durch Verstellen der Gewindemutter zusätzlich variierbar ist, insbesondere der zweite und/oder vierte Abstand entlang der axialen Richtung zwischen dem ersten und zweiten Anschlag verstellbar oder variierbar ist.

In Ausgestaltung der Erfindung ist der Durchmesser des ersten Außengewindebereichs größer als der Durchmesser des zweiten Außengewindebereichs ausgebildet. Der zweite Außengewindebereich kann am freien Ende des Lagerzapfens und/oder der erste Außengewindebereich am dem festen Ende ausgebildet sein. Im Speziellen ist kann der zweite Außengewindebereich ausgehend vom freien Ende des Lagerzapfens und der erste Außengewindebereich zwischen dem festen Ende und dem Rotationslager ausgebildet sein, insbesondere sich erstrecken. Unterschiedliche Durchmesser der Außengewindebereiche, ausgehend von einem kleineren Durchmesser am freien Ende des Lagerzapfens, erlauben eine Montage der Vorrichtung durch alleinigen Zugang zum freien Ende des Lagerzapfens. Dadurch ist eine nicht demontierbare Befestigung des festen Endes des Lagerzapfens, beispielsweise am Rahmen der Ballenpresse, beispielsweise durch eine Schweißverbindung oder als Guss- oder Schmiedeteil eines Rahmenteils des Rahmens möglich. Vorzugsweise ist zwischen den Außengewindebereichen ein Lagerzapfenbereich ohne Gewinde vorgesehen ist, auf dem das Rotationslager aufgenommen ist. Damit kann der Lagerzapfenbereich, auf dem das Rotationslager aufgenommen wird, unabhängig von den Außengewindebereichen und mit davon abweichenden Größen im Durchmesser gefertigt und an einen optimalen Passsitz für das Rotationslager angepasst werden.

Die Erfindung betrifft weiter einen Kettentrieb mit wenigstens einer Vorrichtung, insbesondere einer Vorrichtung nach einem der Ansprüche 1 bis 11. Die oben beschriebene Vorrichtung eignet sich besonders für den Einsatz in einem Kettentrieb zum Antreiben von Presswalzen oder Pressriemen einer Ballenpresse oder Rundballenpresse zum Pressen von Erntegut. Die Vorrichtung kann dabei an einem oder auch an mehreren Kettenrädern des Kettentriebs zum Einsatz kommen.

Die Erfindung betrifft weiter eine Ballenpresse mit einem Kettentrieb, insbesondere einem Kettentrieb nach Anspruch 12 oder einer Vorrichtung nach einem der Ansprüche 1 bis 11.

Die Ballenpresse kann als eine Rundballenpresse ausgebildet sein. In Ausgestaltung der Erfindung ist umfasst die Ballenpresse einen Rahmen, einen Pressraum und am Rahmen angeordnete und den Pressraum umgebende Presswalzen oder Pressriemen zum Pressen von Erntegut. Die Presswalzen oder der Pressriemen sind mit dem Kettentrieb antreibbar. Der Kettentrieb kann am Rahmen angeordnet und/oder mit diesem verbunden, insbesondere an diesem befestigt sein. Der oben genannte Kettentrieb ist in vielerlei Arten von landwirtschaftlichen Maschinen einsetzbar, in denen Rollen, Walzen, Trommeln oder andere Rotationskörper angetrieben werden müssen. Er eignet sich jedoch besonders für den Einsatz in einer Ballenpresse oder Rundballenpresse. Der Kettentrieb kann am Rahmen und/oder einer Seitenwand der Ballenpresse oder Rundballenpresse zum Antreiben der Presswalzen oder des Pressriemens angeordnet sein.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. Die Zeichnungen zeigen:

Es zeigen:

Fig. 1 eine schematische Seitenansicht einer erfindungsgemässen Ballenpresse mit einem erfindungsgemässen Kettentrieb zum Antreiben von Presswalzen und einer erfindungsgemässen Vorrichtung

Fig. 2 eine schematische Darstellung eines Ausführungsbeispiels einer Vorrichtung für den Kettentrieb oder die Ballenpresse aus Figur 1, und

Fig. 3 eine schematische Darstellung einer alternativen Form einer Vorrichtung für den Kettentrieb aus Figur 1.

Fig. 4 eine schematische Darstellung einer weiteren alternativen Form einer Vorrichtung für den Kettentrieb oder die Ballenpresse aus Figur 1.

Fig. 5 eine schematische Darstellung einer weiteren alternativen Form einer Vorrichtung für den Kettentrieb oder die Ballenpresse aus Figur 1.

Fig. 6 eine schematische Darstellung einer weiteren alternativen Form einer Vorrichtung für den Kettentrieb oder die Ballenpresse aus Figur 1.

Fig. 7 eine schematische Darstellung einer weiteren alternativen Form einer Vorrichtung für den Kettentrieb oder die Ballenpresse aus Figur 1.

Fig. 8 eine schematische Darstellung einer weiteren alternativen Form einer Vorrichtung für den Kettentrieb oder die Ballenpresse aus Figur 1.

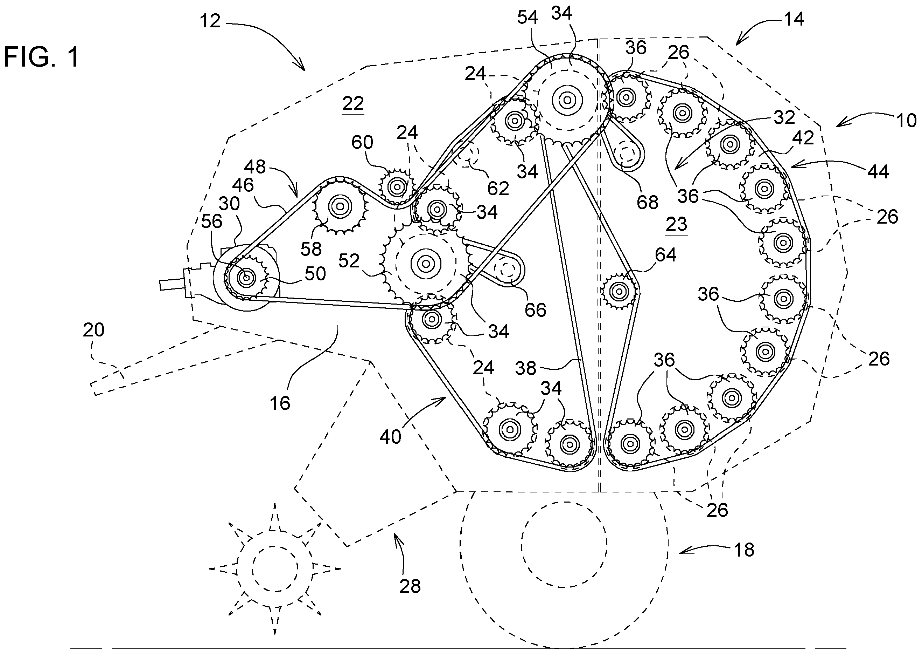

Eine in Figur 1 dargestellte Ballenpresse 10, die insbesondere als Rundballenpresse ausgebildet ist, weist einen vorderen Teil 12 und einen rückwärtigen Teil 14 auf. Die Ballenpresse 10 umfasst ferner einen Rahmen 16, ein Fahrwerk 18, eine Deichsel 20, Seitenwände 22 am vorderen Teil 12, Seitenwände 23 am hinteren Teil 14, Presswalzen 24 am vorderen Teil 12, Presswalzen 26 am hinteren Teil 14, einen Zuführzusammenbau 28 zur Aufnahme eines Ernteguts und eine Antriebsvorrichtung 30. Der Rahmen 16 besteht aus Streben und dergleichen, die die vorgenannten Komponenten zusammenhalten und tragen und somit den vorderen Teil 12 zu einer Einheit formen. Das Fahrwerk 18 setzt sich nicht näher bezeichnet aus einer Achse und daran angebrachten Rädern zusammen, die sich im unteren rückwärtigen Bereich des vorderen Teils 12 befinden und die gesamte Ballenpresse 10 auf dem Boden fahrbar abstützen. Die Deichsel 20 dient dem Anschluss der Ballenpresse 10 an einem Zugfahrzeug, z. B. an einem Ackerschlepper, und ist fest mit dem Rahmen 16 verbunden.

Die Seitenwände 22, 23 sind ebenfalls fest mit dem Rahmen 16 verbunden und schließen eine Presskammer 32 stirnseitig ab. Die Seitenwände 22, 23 nehmen hierzu einen Abstand zueinander ein und nehmen die Presswalzen 24 und 26 beweglich auf. Im oberen rückwärtigen Bereich des vorderen Teils 12 ist ein Lager (nicht gezeigt) vorgesehen, das dem vertikal schwenkbaren Anschluss des rückwärtigen Teils 14 dient. Die Seitenwände 22, 23 sind durch nicht näher bezeichnete aber hinlänglich bekannte Querstreben miteinander verbunden.

Die Presswalzen 24 und 26 sind in bekannter Weise aus einem Blechmantel und einer Welle oder Wellenstummeln zusammengesetzt. Die Mittelpunkte der Presswalzen 24 und 26, d. h. deren Drehachsen liegen im Wesentlichen auf einem Teil eines Kreises, der die Presskammer 32 umgibt. Auf wenigstens einer Seite der Ballenpresse 10 sind auf der Außenseite der Seitenwände 22, 23 am vorderen Teil 12 auf den Presswalzen 24 Kettenräder 34 und am hinteren Teil 14 auf den Presswalzen 26 Kettenräder 36 vorgesehen. Die Kettenräder 34 der Presswalzen 24 sind von einer Antriebskette 38 eines ersten Kettentriebs 40 umgeben. Die Kettenräder 36 der Presswalzen 26 sind von einer Antriebskette 42 eines zweiten Kettentriebs 44 umgeben. Eine weitere Antriebskette 46 eines dritten Kettentriebs 48 dient zum Antreiben des ersten und zweiten Kettentriebs 40 und 44. Der dritte Kettentrieb 48 wird von einem Hauptantriebskettenrad 50, welches mit der Antriebsvorrichtung 30 verbunden ist angetrieben. Der dritte Kettentrieb 48 treibt ein erstes Antriebskettenrad 52 an, welches zum Antreiben des ersten Kettentriebs 40 dient. Der dritte Kettentrieb 48 treibt ferner auch ein zweites Antriebskettenrad 54 an, welches zum Antreiben des zweiten Kettentriebs 44 dient. Das erste und zweite Antriebskettenrad 52 und 54 sind jeweils doppelt verzahnt, wobei eine erste Verzahnung des ersten Antriebskettenrad 52 und eine erste Verzahnung des zweiten Antriebskettenrad 54 mit dem dritten Kettentrieb 48 in Verbindung stehen. Eine zweite Verzahnung des ersten Antriebskettenrades 52 steht mit dem ersten Kettentrieb 40 in Verbindung und treibt diesen an. Eine zweite Verzahnung des zweiten Antriebskettenrades 54 steht mit dem zweiten Kettentrieb 44 in Verbindung und treibt diesen an.

Die Antriebsvorrichtung 28 wird auf nicht gezeigte Weise von dem Zugfahrzeug, z. B. über eine Gelenkwelle, gespeist und enthält im rückwärtigen Bereich der Deichsel 20 eine quer verlaufende Welle 56. Von der Welle 56 geht das Hauptantriebskettenrad 50 aus, welches den dritten Kettentrieb 48 antreibt. Die Kettentriebe 40, 44 und 48 werden über zusätzliche Kettenräder 58, 60, 62, 64 und mittels nicht näher bezeichneter Spannvorrichtungen gespannt. Ferner sind für den ersten Kettentrieb 40 ein Kettenrad 66 und für den zweiten Kettentrieb 44 ein Kettenrad 68 zur Führung bzw. Umlenkung der jeweiligen Antriebsketten 38, 42 vorgesehen. Eine alternative Anordnung von Kettentrieben 40, 44, 48 kann eine Ballenpresse mit Pressriemen umfassen.

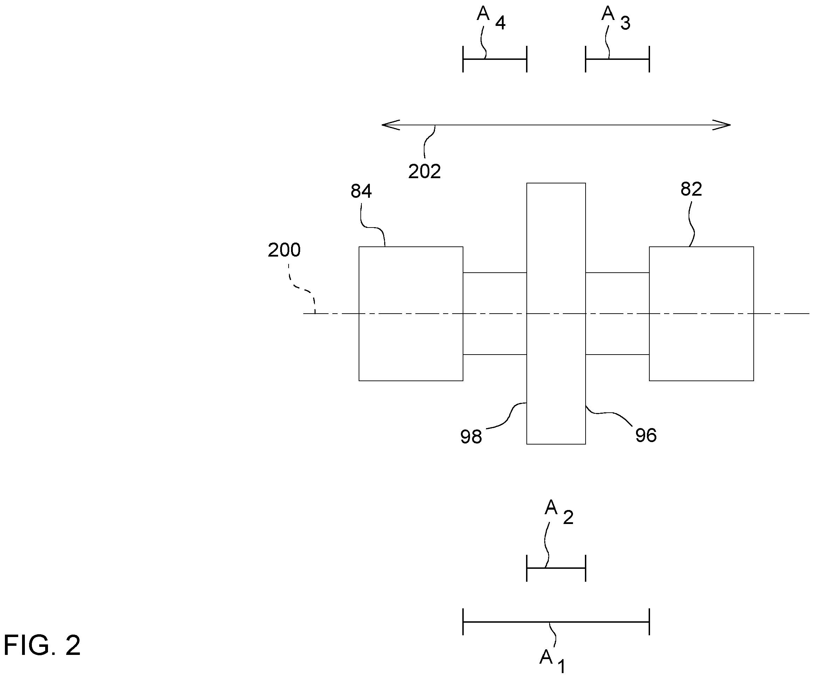

Die Ballenpresse 10 umfasst eine Vorrichtung 70 für einen Kettentrieb 40, 44, 48, insbesondere eine Vorrichtung zum Justieren eines Kettenrades 58, 60, 62, 64, 66, 68 eines Kettentriebs 40, 44, 48. Ebenso kann der Kettentrieb 40, 44, 48 zum Antreiben von Presswalzen 24, 26 oder Pressriemen der Ballenpresse 10 die Vorrichtung 70 umfassen. Die Vorrichtung 70 wird in den Figuren 2 bis 8 detailliert beschrieben. Die Vorrichtung 70 umfasst einen Lagerzapfen 72 und einem auf dem Lagerzapfen 72 angeordneten Rotationslager 74 sowie einem auf dem Rotationslager 74 geführten Kettenrad 58, 60, 62, 64, 66, 68. Am oder auf dem Lagerzapfen 72 sind ein erster Anschlag 82 und ein zweiter Anschlag 84 angeordnet und/oder ausgebildet. Der Lagerzapfen 72 umfasst ein freies Ende 76 und ein festes Ende 78. Letzteres kann an den Rahmen 16, an die Seitenwände 22, 23 oder an einen Spannarm 80 einer Spannvorrichtung (nicht näher bezeichnet) befestigt sein. Die Befestigung des Lagerzapfens 72 kann auf demontierbare (lösbare) Weise in beliebiger Form oder auf nicht lösbare Weise, beispielsweise durch Schweißen oder durch eine im Gieß- oder Schmiedeverfahren des Spannarms 80 hergestellte Verbindung erfolgen. Der erste Anschlag 82 kann am festen Ende des Lagerzapfens 76 und/oder der zweite Anschlag 84 am freien Ende 78 des Lagerzapfens 72 angeordnet und/oder als Bestandteil des Lagerzapfens 72 ausgebildet sein.

Das Rotationslager 74 ist auf dem Lagerzapfen 72 zwischen dem ersten Anschlag 82 und dem zweiten Anschlag 84 entlang einer axialen Richtung 202 des Lagerzapfens 72 frei bewegbar, insbesondere frei bewegbar gelagert. Die axiale Richtung 202 kann in Richtung und/oder parallel zu einer Längsachse 200 des Lagerzapfen 72 zeigen bzw. ausgerichtet sein. Das Rotationslager 74 kann eine erste Stirnfläche 96 und/oder eine zweite Stirnfläche 98 aufweisen. Ein erster Abstand $A_1$ zwischen dem ersten und zweiten Anschlag 82, 84 minus einen zweiten Abstand $A_2$ zwischen der ersten und zweiten Stirnfläche 96, 98, kann $\geq 6$ mm, bevorzugt $\geq 8$ mm, besonders bevorzugt $\geq 10$ mm sein, sodass das Rotationslager 74 auf dem Lagerzapfen 72 zwischen dem ersten Anschlag 82 und dem zweiten Anschlag 84 entlang der axialen Richtung 202 des Lagerzapfens 72 frei bewegbar ist. Mit anderen Worten, die Summe eines dritten Abstands $A_3$ zwischen der ersten Stirnfläche 96 und dem ersten Anschlag 82 und eines vierten Abstands $A_4$ zwischen der zweiten Stirnfläche 98 und dem zweiten Anschlag 84 kann $\geq 6$ mm, bevorzugt $\geq 8$ mm, besonders bevorzugt $\geq 10$ mm sein.

Der erste und zweite Anschlag 82, 84 können, wie in den Figuren 2 bis 8 dargestellt, auf verschiedene Art und Weise ausgebildet und/oder angeordnet sein kann. Die Figuren 2 bis 8 zeigen schematische Darstellungen verschiedener Ausführungsbeispiele einer erfindungsgemässen Vorrichtung 70. Die in den Figuren 2 bis 8 gezeigten Vorrichtung 70 sind im Wesentlichen identisch, aber zumindest ähnlich, sodass im Folgenden lediglich auf Details und/oder Unterschiede eingegangen wird. Die in Figur 1 gezeigte Ballenpresse 10 und/oder der Kettentrieb 40, 44, 48 kann die in den Figuren 2 bis 8 gezeigte Vorrichtung 70 umfassen.

Gemäss Figur 2 gilt:

$$A_1 - A_2 \geq 6\,mm$$

Mit

$A_1$ = Erster Abstand
$A_2$ = Zweiter Abstand

Oder

$$A_3 + A_4 \geq 6\,mm$$

Mit

$A_3$ = Dritter Abstand
$A_4$ = Vierter Abstand

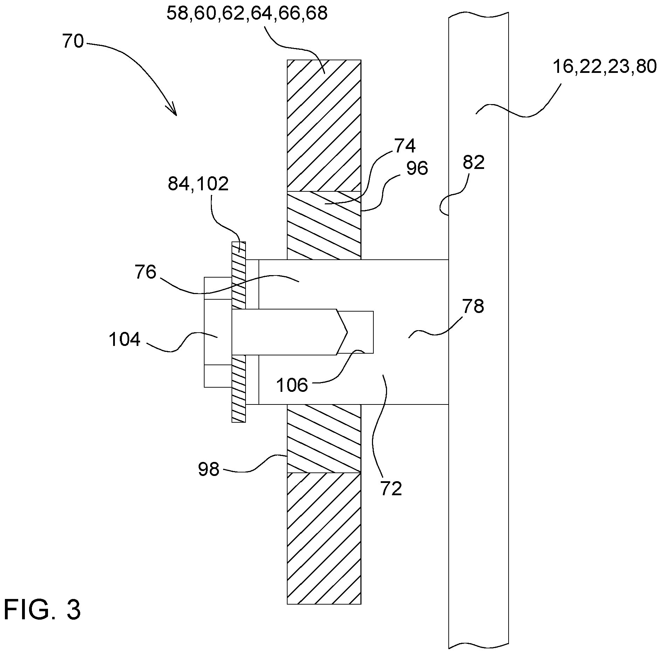

Gemäss Figur 3 wird der erste Anschlag 82 durch das den Lagerzapfen tragende Bauteil, hier der Rahmen 16 oder die Seitenwände 22, 23 oder der Spannarm 80 einer Spannvorrichtung gebildet.

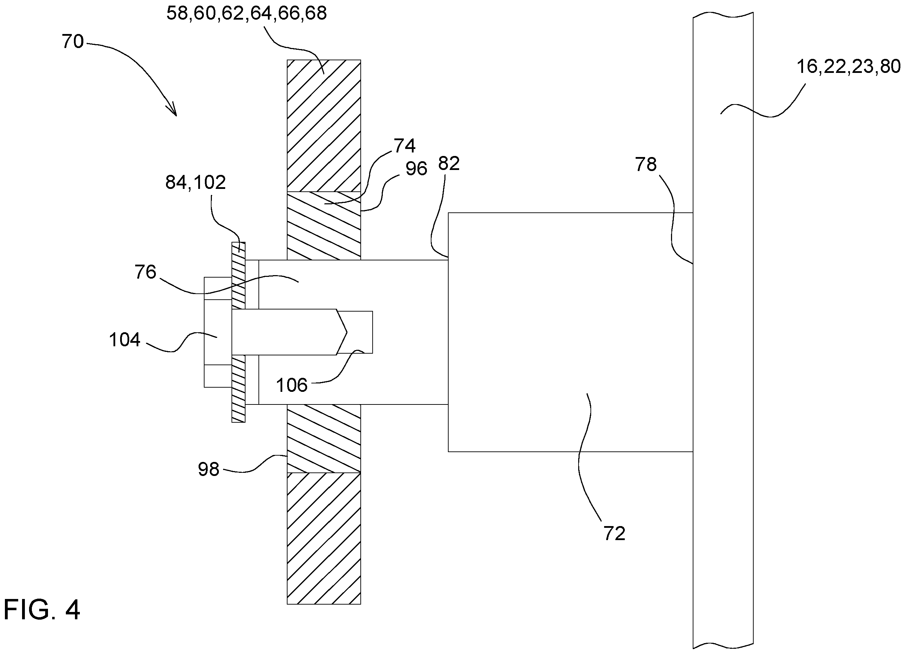

Gemäss Figur 4 kann der erste Anschlag 82 durch einen Wellenabsatz 84 ausgebildet sein. Der Wellenabsatz 84 kann am Lagezapfen 72 angeordnet sein. Ebenso kann der Lagezapfen 72, insbesondere zumindest teilweise, als ein Wellenabsatz 84 geformt sein oder durch einen am Lagerzapfen 72 ausgebildeten Wellenabsatz 84 geformt sein.

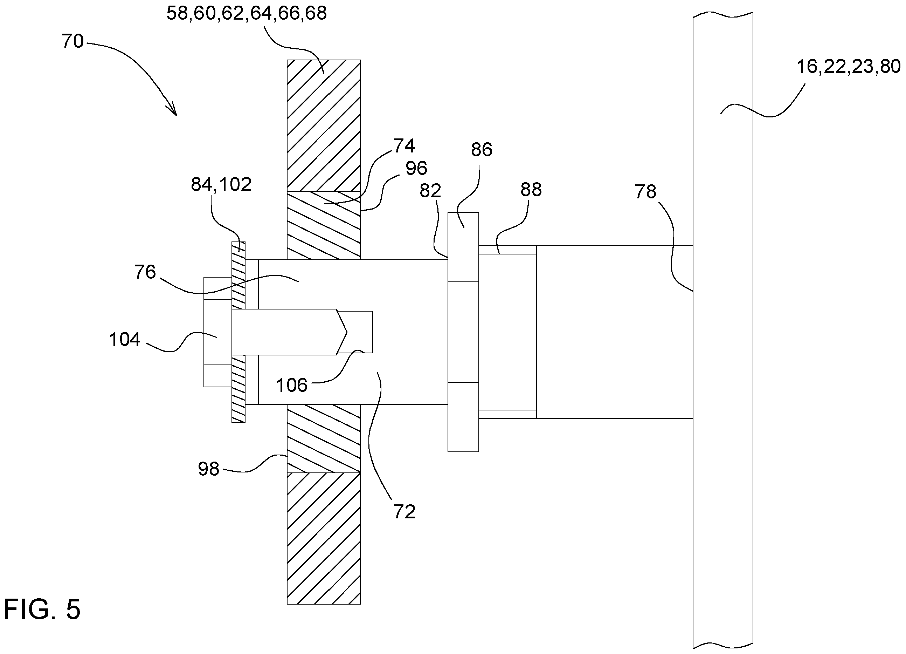

Gemäss Figur 5 wird der erste Anschlag 82 durch eine erste Gewindemutter 86 gebildet, die auf einem ersten Außengewindebereich 88 am Lagerzapfen 72 zwischen Rotationslager 74 und dem festen Ende 78 des Lagerzapfens 72 geführt wird.

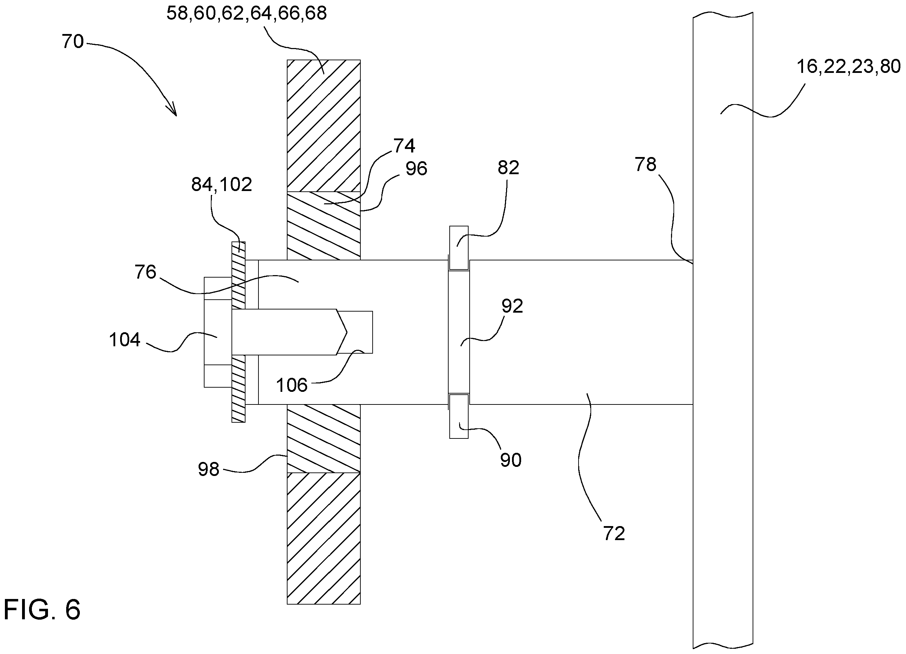

Gemäss Figur 6 wird der erste Anschlag 82 durch einen Sprengring 90 gebildet, der in einer Ringnut 92 am Lagerzapfen 72 zwischen Rotationslager 74 und dem festen Ende 78 des Lagerzapfens 72 geführt wird.

Gemäss Figuren 3 bis 6 ist der zweite Anschlag 84 als eine Spannplatte 102 ausgebildet, wobei das Rotationslager 74 auf dem Lagerzapfen 72 zwischen der Spannplatte 102 und dem ersten Anschlag 82 in axiale Richtung frei beweglich ist. Die Spannplatte 102 ist am freien Ende des Lagerzapfens 72 befestigt. Der Lagerzapfen 72 umfasst ausserdem ein Innengewindebereich und/oder ein Innengewinde 106, an dem über eine Spannschraube 104 die Spannplatte 102 befestigt ist. Im Speziellen kann die Spannschraube 104 im am freien Ende 76 des Lagerzapfens 72 ausgebildeten Innengewinde 106 geführt sein.

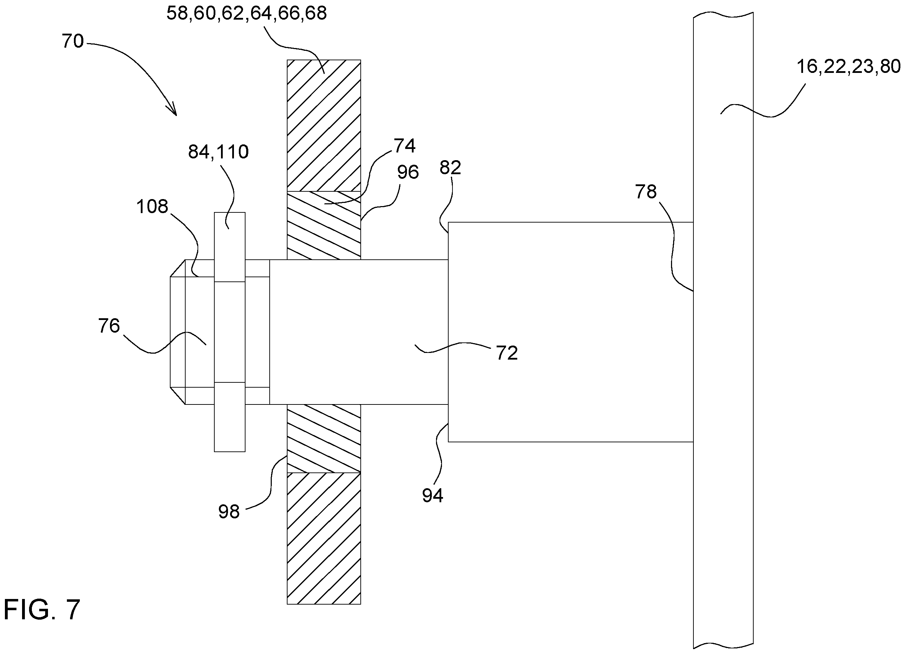

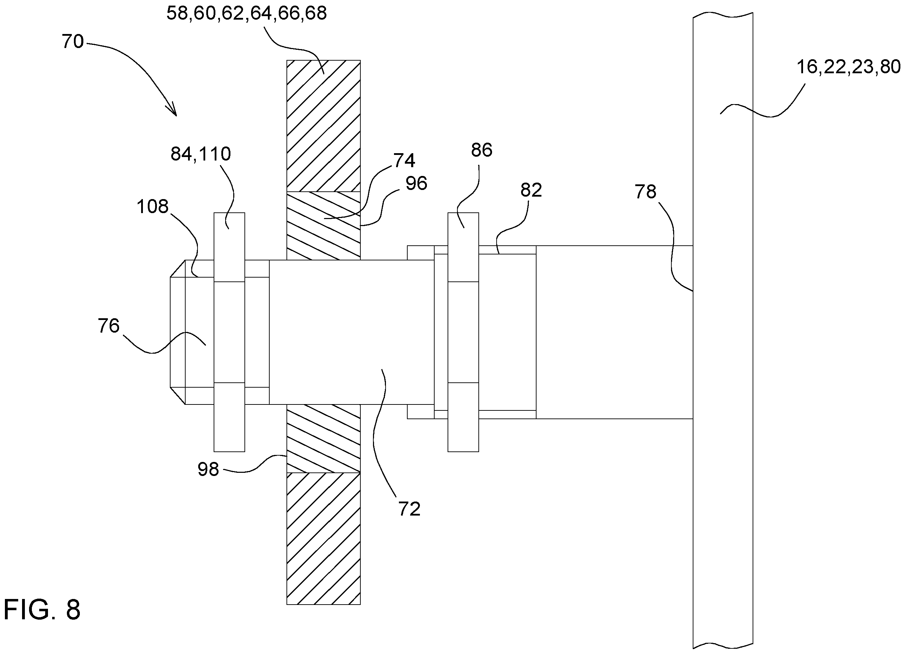

In einer alternativen Ausführungsform, die in Figur 7 und 8 abgebildet ist, kann der zweite Anschlag 84 eine zweite Gewindemutter 110 umfassen, die auf einem am freien Ende 76 des Lagerzapfens 72 ausgebildeten zweiten Außengewinde 108 angeordnet ist. Das zweite Außengewinde 108 im Zusammenspiel mit der zweiten Gewindemutter 110 entfalten dabei dieselbe technische Wirkung wie das oben beschriebene Innengewinde 106, die Spannschraube 104 und die Spannplatte 102 aus den Figuren 3 bis 6. In Fig. 8 umfasst die Vorrichtung 70 die am Lagerzapfen 72 ausgebildeten ersten und zweiten Außengewindebereich 82, 84 bzw. sind der erste und zweite Außengewindebereich 82, 84 als Teil des Lagerzapfens 72 ausgebildet. Der Durchmesser des ersten Außengewindebereichs 82 ist dabei größer als der Durchmesser des zweiten Außengewindebereichs 84 ausgebildet. Durch Verdrehen der ersten und zweiten Gewindemuttern 86, 88 bzw. der ersten Gewindemutter 86 und der Spannschraube 104, kann die Position des Rotationslagers 74 axial zum Lagerzapfen 72 verändert und somit die Abstände eingestellt und/oder verstellt werden.

Wie in den Figuren 2 bis 8 gezeigt ist, ist das Rotationslager 74 zwischen ersten Anschlag 82 und dem zweiten Anschlag 84 in axiale Richtung frei beweglich, insbesondere schwimmend gelagert ist. Je nach Bedarf kann das Rotationslager 74 axial in die eine oder andere Richtung entlang des Lagerzapfens 72 bewegt und/oder justiert werden, wobei der erste und/oder dritte und/oder vierte Abstand variierbar ist. Insgesamt wird dadurch eine axiale Justierung des Rotationslagers 74 und/oder des Kettenrads 58, 60, 62, 64, 66, 68 ermöglicht.

**Patentansprüche**

1. Vorrichtung (70) für einen Kettentrieb (40, 44, 48),

   mit einem Lagerzapfen (72), und einem auf dem Lagerzapfen (72) angeordneten Rotationslager (74) und einem auf dem Rotationslager (74) geführten Kettenrad (58, 60, 62, 64, 66, 68), wobei am Lagerzapfen (72) ein erster Anschlag (82) und ein zweiter Anschlag (84) angeordnet ist,

   **dadurch gekennzeichnet, dass** das Rotationslager (74) auf dem Lagerzapfen (72) zwischen dem ersten Anschlag (82) und dem zweiten Anschlag (84) entlang einer axialen Richtung (202) des Lagerzapfens (72) frei bewegbar ist.

2. Vorrichtung (70) nach Patentanspruch 1, wobei das Rotationslager (74) eine erste Stirnfläche und/oder eine zweite Stirnfläche umfasst, und ein erster Abstand zwischen dem ersten und zweiten Anschlag minus einen zweiten Abstand zwischen der ersten und zweiten Stirnfläche (90, 94), ≥ 6 mm ist.

3. Vorrichtung (70) nach mindestens einem der vorangehenden Ansprüche, wobei der erste Anschlag (82) am festen Ende des Lagerzapfens (76) und/oder der zweite Anschlag (84) am freien Ende (72) des Lagerzapfens (72) ausgebildet ist.

4. Vorrichtung (70) nach mindestens einem der vorangehenden Ansprüche, wobei der erste Anschlag (82) einen Wellenabsatz (84) umfasst, der am Lagerzapfen (72) zwischen dem Rotationslager (74) und dem festen Ende (78) ausgebildet ist.

5. Vorrichtung (70) nach Patentanspruch 1, wobei der erste Anschlag (82) einen Sprengring (90) umfasst, der in einer am Lagerzapfen (72) zwischen dem Rotationslager (74) und dem festen Ende (78) ausgebildeten Ringnut (92) eingefasst ist.

6. Vorrichtung (70) nach Patentanspruch 1, wobei der erste Anschlag (82) eine erste Gewindemutter (86) umfasst, die auf einem am Lagerzapfen (72) zwischen dem Rotationslager (74) und dem festen Ende (78) des Lagerzapfens (72) ausgebildeten ersten Außengewinde (88) angeordnet ist.

7. Vorrichtung (70) nach einem der Patentansprüche 1 bis 6, wobei der zweite Anschlag (84) eine Spannplatte (102) umfasst, und die Spannplatte (102) am freien Ende des Lagerzapfens (72) angeordnet ist, wobei das Rotationslager (74) auf dem Lagerzapfen (72) zwischen der Spannplatte (102) und dem ersten Anschlag in axiale Richtung frei beweglich ist.

8. Vorrichtung (70) nach Anspruch 7, wobei der Lagerzapfen (72) ein Innengewindebereich (100) umfasst, mit dem über eine Spannschraube (104) die Spannplatte (102) verbunden ist.

9. Vorrichtung (70) nach einem der Patentansprüche 1 bis 6, wobei der zweite Anschlag eine zweite Gewindemutter (110) umfasst, die auf einem am freien Ende (76) des Lagerzapfens (72) ausgebildeten zweiten Außengewinde (108) angeordnet ist, und das Rotationslager (74) auf dem Lagerzapfen (72) zwischen der Gewindemutter (110) und dem ersten Anschlag in axiale Richtung frei beweglich ist.

10. Vorrichtung (70) nach mindestens einem der vorangehenden Ansprüche, **dadurch gekennzeichnet, dass** der Durchmesser des ersten Außengewindebereichs (82) größer als der Durchmesser des zweiten Außengewindebereichs (84) ausgebildet ist.

11. Vorrichtung (70) nach mindestens einem der vorangehenden Ansprüche, **dadurch gekennzeichnet, dass** der zweite Außengewindebereich (84) am freien Ende (76) des Lagerzapfens (72) und/oder der erste Außengewindebereich (82) am dem festen Ende (78) ausgebildet ist.

12. Kettentrieb (40, 44, 48) zum Antreiben von Presswalzen (24, 26) oder Pressriemen einer Ballenpresse (10) zum Pressen von Erntegut, mit wenigstens einer Vorrichtung (70) nach einem der vorrangehenden Patentansprüche.

13. Ballenpresse (10) mit einem Kettentrieb (40, 44, 48) nach Anspruch 12.

14. Ballenpresse nach Anspruch 13, wobei die Ballenpresse einen Rahmen (16), einen Pressraum (32) und am Rahmen (16) angeordnete und den Pressraum (32) umgebende Presswalzen (24, 26) oder Pressriemen zum Pressen von Erntegut umfasst, wobei die Presswalzen (24, 26) oder der Pressriemen mit dem Kettentrieb (40, 44, 48) antreibbar sind.

FIG. 1

EP 4 666 841 A1

FIG. 2

EP 4 666 841 A1

FIG. 3

EP 4 666 841 A1

EP 4 666 841 A1

FIG. 4

FIG. 5

FIG. 6

FIG. 7

FIG. 8

Europäisches
Patentamt

European
Patent Office

Office européen
des brevets

# EUROPÄISCHER RECHERCHENBERICHT

**Nummer der Anmeldung**

EP 24 18 2459

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 711 731 A (FUKUDA MASAHIKO [JP]) 27. Januar 1998 (1998-01-27) | 1-8,12 | INV. A01F15/18 |
| A | * Spalte 1, Zeile 5 - Zeile 9 * | 9-11,13, | F16H55/30 |
| | * Spalte 2, Zeile 37 - Spalte 3, Zeile 17 * | 14 | F16C35/063 |
| | * Abbildungen 3, 3A, 3B * | | ADD. |
| | ----- | | F16C17/02 |
| A | EP 4 173 471 A1 (DEERE & CO [US]) 3. Mai 2023 (2023-05-03) | 1-14 | F16C19/04 F16C19/24 |
| | * Absatz [0001] * | | |
| | * Absatz [0021] - Absatz [0037] * | | |
| | * Abbildungen 1-6 * | | |
| | ----- | | |

**RECHERCHIERTE SACHGEBIETE (IPC)**

A01F
F16C
F16H

Der vorliegende Recherchenbericht wurde für alle Patentansprüche erstellt

| Recherchenort | Abschlußdatum der Recherche | Prüfer |
|---|---|---|
| München | 20. November 2024 | Nicolai, Sébastien |

EPO FORM 1503 03.82 (P04C03)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................
& : Mitglied der gleichen Patentfamilie, übereinstimmendes Dokument

**ANHANG ZUM EUROPÄISCHEN RECHERCHENBERICHT
ÜBER DIE EUROPÄISCHE PATENTANMELDUNG NR.**

EP 24 18 2459

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-11-2024

| Im Recherchenbericht angeführtes Patentdokument | Datum der Veröffentlichung | Mitglied(er) der Patentfamilie | Datum der Veröffentlichung |
|---|---|---|---|
| US 5711731 A | 27-01-1998 | CN 1186753 A | 08-07-1998 |
| | | DE 69601682 T2 | 09-09-1999 |
| | | EP 0765803 A1 | 02-04-1997 |
| | | JP 3454489 B2 | 06-10-2003 |
| | | JP H0986472 A | 31-03-1997 |
| | | TW 292997 B | 11-12-1996 |
| | | US 5711731 A | 27-01-1998 |
| EP 4173471 A1 | 03-05-2023 | EP 4173470 A1 | 03-05-2023 |
| | | EP 4173471 A1 | 03-05-2023 |
| | | US 2023133649 A1 | 04-05-2023 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19632762 A1

- EP 2952089 A1